Europäisches Patentamt

European Patent Office

Office européen des brevets

(19)

(11) Numéro de publication : **0 305 240 B1**

(12) # FASCICULE DE BREVET EUROPEEN

(45) Date de publication du fascicule du brevet :
18.09.91 Bulletin 91/38

(51) Int. Cl.⁵ : **G01V 1/047, G01V 1/40, E21B 33/12**

(21) Numéro de dépôt : 88401947.2

(22) Date de dépôt : 27.07.88

(54) **Méthode et dispositif pour améliorer le coefficient de transmission aux formations géologiques de l'énergie créée par une source sismique de puits.**

(30) Priorité : 28.07.87 FR 8710722

(43) Date de publication de la demande :
01.03.89 Bulletin 89/09

(45) Mention de la délivrance du brevet :
18.09.91 Bulletin 91/38

(84) Etats contractants désignés :
DE GB IT NL

(56) Documents cités :
EP-A- 236 226
EP-A- 0 213 950

(56) Documents cités :
FR-A- 2 172 808
FR-A- 2 469 720
US-A- 2 281 751
US-A- 3 100 536
US-A- 3 395 728

(73) Titulaire : INSTITUT FRANCAIS DU PETROLE
4, Avenue de Bois-Préau
F-92502 Rueil-Malmaison (FR)

(72) Inventeur : Marin, Eric
11, rue Pont Colbert
F-78000 Versailles (FR)
Inventeur : Le Comte, Marcel
20, allée des Sycomores
F-95870 Bezon (FR)

## Description

L'invention a pour objet un dispositif pour rendre sensiblement ponctuelle l'émission d'une source sismique impulsionnelle adaptée à être descendue à l'intérieur d'un puits et à être couplée aux parois du puits par des moyens d'ancrage escamotables.

Beaucoup de méthodes de prospection sismique comportent l'utilisation de sources sismiques descendues dans des puits ou forages et activées successivement en une pluralité d'emplacements à des profondeurs différentes. La réception des ondes émises est effectuée par des récepteurs disposés dans d'autres puits ou forages, ce qui permet d'obtenir un pouvoir de résolution élevé, ou bien disposés en surface de manière à restituer des profils sismiques obliques. Le rendement énergétique des sources sismiques de puits est en général bien meilleur que celui des sources fonctionnant en surface, du fait qu'elles émettent des ondes sismiques sous la couche superficielle altérée dont les caractéristiques de propagation sont défavorables, mais il est conditionné largement par les moyens utilisés pour les coupler avec les formations géologiques environnantes.

Les sources sismiques de puits à percussion comportent généralement un corps allongé suspendu à l'extrémité d'un câble électro-porteur ou d'un train de tiges. Le corps est relié à des éléments de couplage constitués par exemple de bras, de griffes ou de patins mobiles pouvant être écartés par action de vérins hydrauliques et venir s'appliquer ou s'enfoncer dans la paroi du puits.

Suivant d'autres modes de réalisation, le corps de la source sismique est relié à un élément du type "packer" bien connu des spécialistes, du type comportant un organe expansible constitué d'une partie centrale et d'une partie périphérique que l'on peut dilater en la faisant tourner par rapport à la partie centrale. On peut utiliser aussi des "packers" comportant une enceinte délimitée par une paroi déformable et que l'on dilate par injection d'un liquide sous pression.

Différentes sources sismiques associées à des moyens d'ancrage sont décrites dans les demandes de brevet français publiées sous les numéros 2.597.214, 2.590.994, 2.552.553, 2.553.919 ou 2.558.601.

On a pensé aussi à utiliser dans les puits des sources connues dans le domaine de la prospection sismique marine ou terrestre telles que les sources à implosion fonctionnant par éjection de fluide ou par brusque contraction du volume d'une enceinte close, telle que celle décrite dans la demande de brevet français publiée No. 2.555.761, (correspondant au brevet US No. 4.682.309) ou bien des étinceleurs ou "sparkers" qui engendrent des impulsions par brusque décharge de courant électrique entre des électrodes immergées ou bien encore des sources à explosion.

En étudiant le comportement de telles sources, on constate qu'une fraction de l'énergie émise, plus ou moins importante selon le degré de couplage avec les parois, est transmise à la colonne liquide remplissant généralement le puits et qu'elle s'y propage. Il en résulte que les ondes ébranlant la colonne de liquide de puits viennent perturber la réception des échos utiles correspondant aux signaux directement aux parois par la source et compliquent le traitement des données recueillies. Du fait de cette déperdition d'énergie et de sa dispersion, l'exploitation des sources sismiques de puits ne donnent pas toujours de bons résultats.

Par la demande de brevet EP-A-236226 bénéficiant de la date de priorité du 3 mars 1986 on connait une source sismique de puits du type à explosion disposée entre deux cylindres indéformables remplis de mousse de matière plastique et suspendue à des câbles. La section des deux cylindres est choisie très proche de celle du puits de manière à l'obstruer le mieux possible sans toutefois empêcher la progression de la source le long du puits. La fonction de ces deux cylindres est ici d'absorber une partie de l'énergie qui se propage le long du forage. Cependant l'espace annulaire entre les cylindres et la paroi n'étant pas dans la plupart des cas parfaitement clos du fait que la section du puits peut varier sensiblement d'un endroit à un autre, la continuité de la colonne d'eau dans le puits n'est pas toujours bien interrompue. Dans le cas général une tel source ne peut être considérée comme ponctuelle.

On doit noter aussi que l'absence de couplage réel des cylindres absorbants de cette source, rend nécessaire le maintien en tension des câbles de support ce qui cause une transmission parasite d'énergie le long de la colonne d'eau dans le puits.

Par la demande de brevet européen EP-A-213 950 on connait un dispositif de création d'ondes sismiques dans un puits par formation d'ondes stationnaires. Un vibrateur est descendu dans un puits. La zone de puits contenant la source est confinée de part et d'autre par des blocs d'obturation. Les vibrations créées par la source sont communiquées au liquide remplissant la zone confinée. Leur fréquence est choisie, pour que la colonne d'eau délimitée entre les deux blocs d'obturation vibre en demi-onde et qu'il y ait amplification mécanique par résonance. Avec un tel dispositif, l'espacement entre les blocs doit être adapté à la fréquence des vibrations à transmettre ; et l'énergie sismique engendrée n'est pas transmise directement aux parois mais par l'intermédiaire de la colonne liquide. Les organes expansibles qui servent de noeuds vibratoires font partie de la source sismique.

Le dispositif d'émission sismique pour puits selon l'invention comporte une source sismique impulsionnelle adaptée à être descendue dans un puits ou forage et pourvue de moyens d'ancrage escamotables pour l'application directe aux formations environnant le puits de l'énergie créée par la source sismique à son déclenchement. Il est caractérisé en ce qu'il comporte en combinaison au moins deux organes de confinement expansibles disposés de part et d'autre de la source sismique et connectés à celle-ci, pour empêcher la propagation le long du puits de la fraction d'énergie non transmises directement aux parois du puits, chaque organe expansible comprenant un élément tubulaire rigide, une gaine réalisée en matériau élastique, des moyens pour serrer la gaine contre l'élément tubulaire à une première extrémité de celle-ci, un élément-poussoir pouvant coulisser le long de l'élément tubulaire, ledit élément-poussoir comportant une partie tronconique adaptée à venir se glisser entre l'élément tubulaire et la gaine à sa seconde extrémité, de manière à l'écarter de l'élément tubulaire, et des moyens pour déplacer chaque élément-poussoir, et un système hydraulique délivrant un fluide sous pression, associé à des moyens de commutation pour déplacer à volonté chaque élément poussoir et dilater chaque organe expansible.

L'énergie sismique non transmise directement aux formations environnantes par les moyens d'ancrage au moment du déclenchement de la source, reste alors bien localisée dans la zone de puits confinée. Il en résulte que la source de puits impulsionnelle d'un type quelconque utilisée, peut être considérée comme ponctuelle et les effets perturbateurs induits par la mise en vibration de la colonne liquide contenue dans le puits, sont pratiquement supprimés. L'utilisation de moyens d'ancrage pour bloquer la source dans le puits rend possible le relâchement du câble de support et la transmission parasite qui autrement a lieu du fait de sa tension.

D'autres avantages de la méthode et les caractéristiques du dispositif de mise en oeuvre apparaîtront à la lecture de la description d'un mode de réalisation donné à titre d'exemple non limitatif, en se référant aux dessins annexés où :

— la figure 1 montre sous une forme schématique une source sismique de puits d'un type quelconque associée de part et d'autre à des éléments de confinement ;

— la figure 2 montre plus en détail en demi-coupe longitudinale, un élément de confinement disposé entre un câble électro-porteur et la source sismique ;

— la figure 3 montre plus en détail en demi-coupe longitudinale, un autre élément de confinement disposé du côté opposé de la source sismique ; et

— la figure 4 montre une vue partielle en demi-coupe longitudinale, de l'élément de confinement inférieur dans une position dilatée où il obture le puits et du compartiment contenant le système hydraulique commandant le confinement de la source sismique.

Le dispositif comporte une source sismique de puits 1 d'un type connu, associé à deux éléments ou organes de confinement 2, 3. Le premier 2, est disposé d'un côté de la source sismique. Le second 3, est disposé du côté opposé. Il est prolongé par un compartiment 4 contenant un système hydraulique de manoeuvre qui sera décrit en relation avec la figure 4. L'ensemble est relié par un câble multi-fonctions de grande longueur 5 (ou câble électro-porteur) à une installation de surface non représentée comportant des moyens de manoeuvre et de commande.

La source sismique peut être d'un type quelconque mais le procédé selon l'invention convient particulièrement pour celles qui engendrent de l'énergie sismique au sein du liquide remplissant généralement les forages où elles sont descendues. C'est le cas des sources à implosion et notamment de celle qui est décrite dans la demande de brevet français précitée n° 2.555.761 où l'on engendre des impulsions par le brusque retrait à l'intérieur d'une cavité cylindrique d'un piston au contact du liquide de puits. Un système hydraulique propre permet le réarmement de la source et son ancrage dans le puits par écartement de bras mobiles sous l'effet de vérins de manoeuvre. Le fluide hydraulique à haute pression est fourni par des accumulateurs chargés par une pompe. Le moteur électrique d'entrainement de la pompe est alimenté par des conducteurs électriques contenus dans le câble électro-porteur 5. Il peut s'agir encore d'étinceleurs (ou sparkers) créant des ébranlements dans le liquide du puits par une décharge de courant électrique entre deux électrodes immergées, ou bien encore de sources sismiques à explosion.

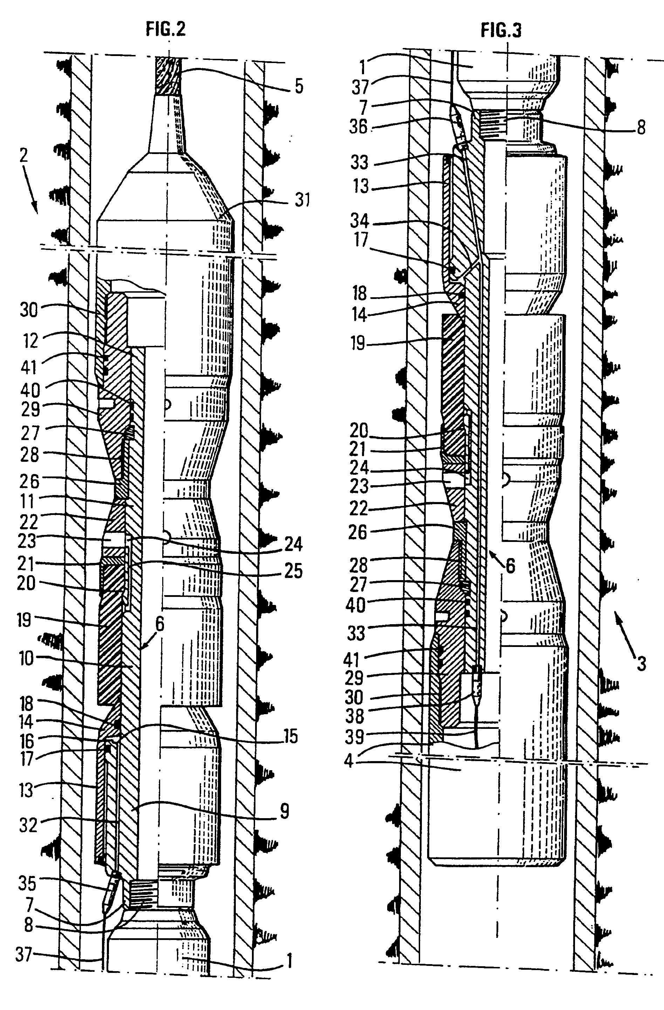

Chaque élément de confinement (fig. 2, 3) comporte un élément tubulaire central 6 pourvu à une première extrémité d'un alésage 7 fileté. La source sismique est pourvue d'un embout 8 également fileté à chacune de ses extrémités opposées. Ainsi, elle peut être rendue solidaire par vissage des éléments de confinement associés 2, 3. L'élément tubulaire comprend depuis sa première extrémité jusqu'à son extrémité opposée, quatre parties 9, 10, 11, 12 de sections décroissantes. Sur la partie de plus forte section est engagé un élément-poussoir 13 terminé par une tête tronconique 14. L'élément poussoir 13 est pourvu d'une cavité intérieure 15 ouverte du côté opposé à la tête, dont la section est adaptée à celle de la partie 9 de l'élément tubulaire. Une ouverture 16 est ménagée suivant l'axe de la tête. Sa section est sensiblement égale à celle de la seconde partie 10 de l'élément tubulaire 6. Des joints 17, 18 sont disposés au niveau de la tête 14 et de la cavité intérieure 16 pour assurer le coulissement étanche de l'élément poussoir 13 le long de l'élément tubulaire 6. Dans sa position de repos représentée aux figures 2, 3, le fond de la cavité 15 repose sur l'épaulement 16 entre les deux parties 9 et 10 de l'élément tubulaire 6.

Une gaine 19 réalisée en élastomère est engagée sur l'élément tubulaire 6. A une première extrémité, elle vient s'appuyer contre le bec (ou biseau) de la tête tronconique 14. A son extrémité opposée, au niveau de l'épaulement 20 entre les deux partie 10 et 11 de l'élément tubulaire 6, elle est plaquée et maintenue contre celui-ci par enfoncement d'un collier 21. Au contact du collier 21 est disposée une bague 22 dont la paroi latérale comporte une ouverture 23. Au niveau de l'ouverture 23, l'élément tubulaire 6 est pourvu d'une rainure circulaire 24. Un canal 25 est ménagé dans la paroi du même élément. Il débouche dans la rainure 24 à une première extrémité et à l'extérieur de l'élément tubulaire sous la gaine 19, à son extrémité opposée. Une seconde bague 26 est engagée à la suite du collier 21 et de la bague 22 autour de l'élément tubulaire et bloquée en translation par rapport à celui-ci au moyen d'un circlips 27. La bague 26 est pourvue d'un filetage extérieur 28. Un écrou 29 est engagé à la suite de la bague 26. Il est pourvu à une première extrémité d'un filetage intérieur venant se visser sur le filetage 28 de celle-ci. A son extrémité opposée, il est pourvu d'un filetage 30 sur lequel on vient visser une pièce terminale. D'un côté cette pièce terminale comporte un manchon (ou coiffe) 31 contenant des moyens de fixation du câble électro-porteur et tout autre appareillage utilisé conventionnellement dans les outils de puits.

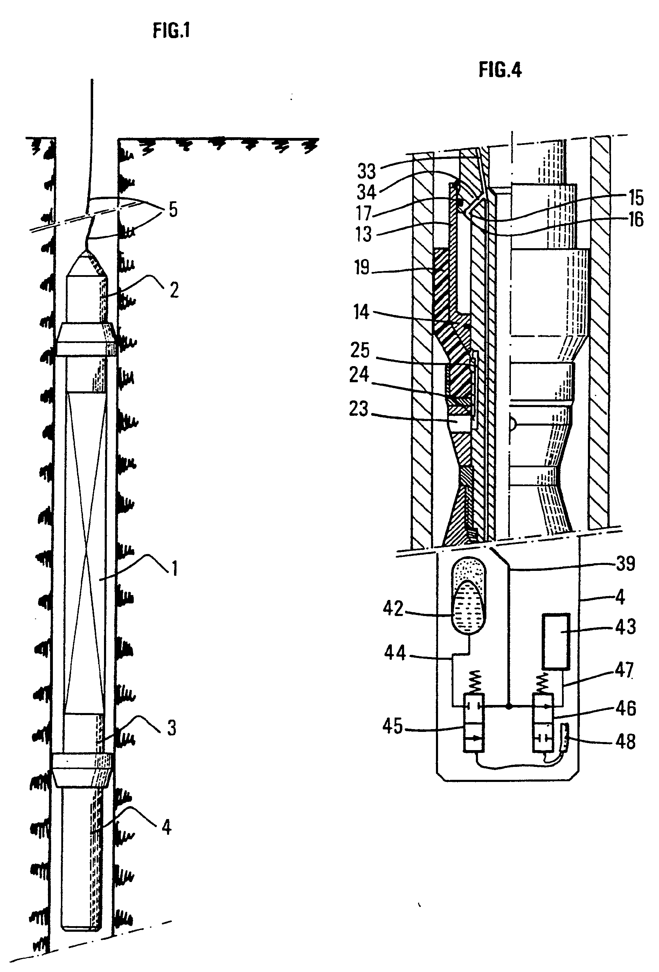

Du côté opposé, cette pièce terminale est le compartiment clos 4 renfermant le système hydraulique (cf. fig. 1).

Dans la paroi de l'élément tubulaire 6 de l'organe de confinement 2 (du côté du câble électro-porteur 5), au niveau de sa partie la plus large 9, est ménagé (fig. 2) un canal 32. Il débouche dans la cavité 15 à une première extrémité et à l'extérieur de l'organe de confinement à son extrémité opposée.

Dans la paroi de l'élément tubulaire de l'autre organe de confinement 3 (fig. 3) et sur toute sa longueur, est ménagé un premier canal 33 qui débouche à l'extérieur au voisinage de l'alésage fileté 7 à une première extrémité et dans le compartiment 4 à son extrémité opposée. Un autre canal 34 relie la cavité 15 de l'organe de confinement 3 au premier canal 33.

Les extrémités des deux canaux 32 et 33 débouchant respectivement hors des deux organes de confinement 2, 3, sont pourvues de connecteurs hydrauliques respectivement 35, 36 sur lesquels sont connectées respectivement les deux extrémités d'une même canalisation 37. De la même façon, l'extrémité du canal 33 opposée à la prise 36 (fig. 3) comporte un autre connecteur 38 pour une canalisation 39 connectée au système hydraulique.

Des joints d'étanchéité 40 sont disposés entre chaque élément tubulaire 6 et l'écrou 29 correspondant. D'autres joints d'étanchéité 41 sont disposés entre l'écrou 29 et la paroi de la pièce terminale, qu'il s'agisse de la coiffe ou manchon 31 ou du compartiment 4 contenant le système hydraulique.

Celui-ci comporte (fig. 4) un accumulateur hydraulique 42 chargé à un pression supérieure à la pression hydrostatique régnant dans le puits à la profondeur maximale d'utilisation de la source sismique, et un réservoir 43 à une pression faible, la pression atmosphérique par exemple. L'accumulateur 42 communique avec la canalisation 39 (cf. fig. 3) par l'intermédiaire d'un conduit 44 et d'une électro-vanne 45 fermée au repos. De la même façon, la canalisation 39 communique par l'intermédiaire d'une électro-vanne 46 ouverte au repos et d'un conduit 47.

Les deux électro-vannes sont alimentées en courant électrique par des lignes d'alimentation 48 raccordées au câble multi-fonctions 5.

Dans la position de repos des électro-vannes 45, 46 représentée à la figure 4, la pression appliquée dans les cavités 15 des deux organes confinement 2, 3 est celle qui règne dans le réservoir à basse pression 43. La pression hydrostatique extérieure plus élevée plaque les gaines 19 contre les éléments tubulaires 6 et l'ensemble schématisé à la figure 1 peut se déplacer librement.

Le dispositif fonctionne de la manière suivante :

— On manoeuvre le câble multi-fonctions 5 de manière à amener l'ensemble schématisé à la figure 1 à la profondeur d'utilisation souhaitée.

— On commande par l'intermédiaire des lignes 48, la commutation des électro-vannes 45, 46. La seconde 46 se ferme, isolant la canalisation 39 du réservoir 43. La première 45 en s'ouvrant, met la canalisation 39 en communication avec l'accumulateur sous pression 42. Le fluide à très haute pression est appliqué par les canalisations 32, 33, 34, aux deux cavités 15 (fig. 2, 3). Sous la poussée, chacun des deux éléments poussoirs 13 coulisse. Leurs têtes en biseau 14 viennent écarter latéralement l'extrémité libre des deux gaines et s'engager dessous. La longueur du canal 25 est choisie de manière à déboucher sous la gaine élastique 19 au voisinage du biseau de l'élément-poussoir en position d'avancement maximal de celui-ci (fig. 4). En fonction de la section du puits, les dimensions d'un élément poussoir 13, de sa tête tronconique 14 et de la gaine 19 sont déterminées pour que celle-ci vienne s'appliquer étroitement contre la paroi environnante. La zone de puits entre les deux organes de confinement est alors bien isolée du reste du puits.

— On actionne les moyens de couplage de la source sismique aux parois du puits si celle-ci en est pourvue.

— On détend de préférence le câble électro-porteur de façon à éviter un rayonnement d'énergie par son intermédiaire, les forces de frottement entre les gaines et le puits suffisant à maintenir le dispositif en place.

La source sismique peut alors être déclenchée.

Le dispositif devant être déplacé d'un emplacement du puits à un autre, on commande la commutation des électro-vannes 45, 46, de façon à isoler l'accumulateur 42 et mettre la canalisation 39 (et donc les cavités 15) en communication avec le réservoir 43 où la pression est très faible. La pression extérieure pousse la gaine élastique contre l'élément tubulaire 6. En se resserrant, elle fait reculer l'élément-poussoir vers sa position de repos (fig. 2, 3). La communication permanente établie par le canal 25 et l'orifice 23, entre le puits et le dessous de la gaine au voisinage de l'emplacement de l'élément-poussoir en position avancée (fig. 4), permet à la pression hydrostatique de s'exercer sur le bec de celui-ci et donc de vaincre plus facilement les forces de frottement. On évite ainsi un coincement éventuel de l'élément-poussoir sous la gaine.

Avec le dispositif selon l'invention, l'énergie sismique développée par la source sismique au sein du liquide contenu dans le puits, ne se propage pratiquement pas hors de la zone de confinement. Le rendement énergétique effectif de la source sismique est donc accru.

On remarque aussi que les éléments de confinement reviennent en position de repos si l'alimentation électrique est interrompue quelle qu'en soit la raison. Ceci évite tout blocage accidentel du dispositif dans le puits.

Dans le cas où la source sismique utilisée comporte un système hydraulique propre, on ne sortirait pas du cadre de l'invention en connectant les circuits 32, 33, 34 par l'intermédiaire d'électro-vannes identiques à 45, 46 aux circuits d'alimentation dudit système.

On ne sortirait pas non plus du cadre de l'invention en remplaçant les éléments de confinement décrits par tous organes expansibles d'un type quelconque, des garnitures d'étanchéité dites "packers" par exemple.

## Revendications

1. Dispositif d'émission sismique sensiblement ponctuel pour puits comportant une source sismique impulsionnelle (1) adaptée à être descendue dans un puits ou forage et pourvue de moyens d'ancrage escamotables pour l'application directe aux formations environnant le puits de l'énergie créée par la source sismique à son déclenchement, comportant en combinaison au moins deux organes de confinement expansibles (2, 3) disposés de part et d'autre de la source sismique et connectés à celle-ci, pour empêcher la propagation le long du puits de la fraction d'énergie non transmise directement aux parois du puits, chaque organe expansible comprenant un élément tubulaire rigide (6), une gaine (19) réalisée en matériau élastique, des moyens (21) pour serrer la gaine contre l'élément tubulaire (6) à une première extrémité de celle-ci, un élément-poussoir (13) pouvant coulisser le long de l'élément tubulaire (6), ledit élément-poussoir comportant une partie tronconique (14) adaptée à venir se glisser entre l'élément tubulaire et la gaine à sa seconde extrémité, de manière à l'écarter de l'élément tubulaire, et des moyens pour déplacer chaque élément-poussoir, un système hydraulique délivrant un fluide sous pression associé à des moyens de commutation (45, 46) pour déplacer à volonté chaque élément-poussoir et dilater chaque organe expansible.

2. Dispositif selon la revendication 1, caractérisé en ce qu'il comporte un canal (25) communiquant avec le puits à une première extrémité et débouchant sous la gaine (19) à son extrémité opposée.

3. Dispositif selon la revendication 1 ou 2, caractérisé en ce qu'une cavité (15) est ménagée entre l'élément-poussoir et ledit élément tubulaire, chaque élément tubulaire comporte plusieurs parties (9, 12) de sections extérieures différentes séparées par épaulements, et ledit élément-poussoir comportant un évidement intérieur, de section adaptée à celle de la partie la plus large (9) de l'élément tubulaire, l'espace entre le fond dudit évidement et un desdits épaulements (16) constituant ladite cavité (15).

4. Dispositif selon la revendication 2, caractérisé en ce que le système hydraulique est commun pour les deux organes expansibles et disposé dans un compartiment (4) prolongeant l'une d'entre eux (3), la cavité intérieure (15) du second organe expansible (2) fixé du côté opposé de la source sismique, étant reliée au système hydraulique par l'intermédiaire d'un premier canal (32), d'un second canal (33) traversant sur toute sa longueur l'élément tubulaire (6) du premier organe expansible et d'une canalisation extérieure (37) reliant lesdits canaux (32, 33), la cavité intérieure (15) du premier organe expansible (3) communiquant avec le second canal (33) par un troisième canal (34).

5. Dispositif selon la revendication 3, caractérisé en ce que, l'élément-poussoir (13) et la gaine (19) de chaque organe expansible sont prolongés par des bagues (22, 26) solidaires en translation de l'élément tubulaire correspondant et par un écrou (29) assujetti à l'une desdites bagues et à une pièce terminale (31, 4), chaque élément tubulaire (8) comportant à son extrémité opposée à la pièce terminale, des moyens de fixation (7, 8) à la source sismique.

6. Dispositif selon la revendication 5, caractérisé en ce que la pièce terminale de l'un des organes expansibles (2) est raccordée à un câble multi-fonctions (5) reliant le dispositif à une installation hors du puits, et la pièce terminale de l'autre organe expansible (3) est un compartiment contenant ledit système hydraulique.

7. Dispositif selon la revendication 1, caractérisé en ce que le système hydraulique comporte un accumulateur hydraulique (42) chargé à une pression supérieure à la pression hydrostatique régnant dans le puits à la profondeur maximale d'utilisation de la source sismique, un réservoir (43) à une pression très faible, et des électro-vannes (45, 46) pour connecter lesdits canaux (32 à 34) avec ledit accumulateur hydraulique ou ledit réservoir de façon à provoquer une dilatation ou un relâchement de chacune des gaines (19).

## Patentansprüche

1. Im wesentlichen punktförmige seismische Emissionsvorrichtung für Bohrlöcher mit einer seismischen Impulsquelle (1), die so ausgebildet ist, daß sie in ein Bohrloch oder eine Bohrung hinabgelassen wird und mit versenkbaren Verankerungsmitteln versehen ist, um direkt an die das Bohrloch umgebenden Formationen Energie zu legen, die durch die seismische Quelle bei ihrer Auslösung erzeugt wurde, umfassend in Kombination : wenigstens zwei expansible Begrenzungsorgane (2, 3), die zu beiden Seiten der seismischen Quelle angeordnet und mit dieser verbunden sind, um längs des Bohrloches die Fortpflanzung des Bruchteils der nicht direkt an die Wandungen des Bohrlochs übertragenen Energie zu verhindern, wobei jedes expansible Organ ein steifes röhrenförmiges Element (6), eine aus einem elastischen Material realisierte Hülle (19), Mittel (21) zum Spannen der Hülle gegen das röhrenförmige Element (6) an einem ersten Ende hiervon, ein Stößelelement (13), das längs des röhrenförmigen Elements (6) gleitverschieblich ist, wobei das Stößelelement einen kegelstumpfförmigen Teil (14) umfaßt, der so ausgebildet ist, daß er zwischen dem röhrenförmigen Element und der Hülle an seinem zweiten Ende gleitet, derart, daß er sie von dem röhrenförmigen Element entfernt und Mittel aufweist, um jedes Stößelelement zu verschieben bzw. zu bewegen, wobei ein hydraulisches System ein Fluid unter Druck in Zuordnung zu Schaltmitteln (45, 46) aufweist, um nach Wunsch jedes Stößelelement zu verschieben und jedes expansible Organ zu weiten.

2. Vorrichtung nach Anspruch 1, dadurch gekennzeichnet, daß sie einen Kanal (25) aufweist, der mit dem Bohrloch an einem ersten Ende in Verbindung steht und unter der Hülle (19) an seinem entgegengesetzten Ende mündet.

3. Vorrichtung nach Anspruch 1 oder 2, dadurch gekennzeichnet, daß ein Hohlraum (15) zwischen dem Stößelelement und diesem röhrenförmigen Element vorgesehen ist, wobei jedes röhrenförmige Element mehrere Teile (9, 12) unterschiedlichen durch Schultern getrennten Außenquerschnitts umfaßt und dieses Stößelelement eine innere Ausnehmung von einem Querschnitt umfaßt, der dem des breitesten Teils (9) des röhrenförmigen Elements angepaßt ist, wobei der Raum zwischen dem Boden dieser Ausnehmung und einer dieser Schultern (16) diesen Hohlraum (15) bildet.

4. Vorrichtung nach Anspruch 2, dadurch gekennzeichnet, daß das hydraulische System für die beiden expansiblen Organe gemeinsam und in einer Kammer (4) vorgesehen ist, die eines von ihnen (3) verlängert, wobei der Innenhohlraum (15) des zweiten expandierfähigen Organs (2), das auf der der seismischen Quelle gegenüberliegenden Seite befestigt ist, mit dem hydraulischen System vermittels eines ersten Kanals (32) eines zweiten Kanals (33), der auf seiner gesamten Länge das röhrenförmige Element (6) des ersten expandierfähigen Organs durchsetzt und einer äußeren Leitung (37) verbunden ist, die diese Kanäle (32, 33) verbindet, wobei der Innenhohlraum (15) des ersten expansiblen Organs (13) mit dem zweiten Kanal (33) über einen dritten Kanal (34) in Verbindung steht.

5. Vorrichtung nach Anspruch 3, dadurch gekennzeichnet, daß das Stößelelement (13) und die Hülle (19) jedes expansiblen Organs über Ringe (22, 26), die translatorisch fest mit dem entsprechenden röhrenförmigen Element sind und über eine Mutter (29) verlängert sind, die an einem dieser Ringe und an einem Endstück (31, 4) befestigt ist, wobei jedes röhrenförmige Element (8) an seinem dem Endstück gegenüberliegenden Ende Mittel (7, 8) zur Befestigung an der seismischen Quelle umfaßt.

6. Vorrichtung nach Anspruch 5, dadurch gekennzeichnet, daß das Endstück eines der expansiblen Organe (2) mit einem Multifunktionskabel (5) verbunden ist, welches die Vorrichtung mit einer Installation außerhalb des Bohrloches verbindet und das Endstück des anderen expansiblen Organs (3) eine Kammer ist, welche dieses hydraulische System enthält.

7. Vorrichtung nach Anspruch 1, dadurch gekennzeichnet, daß das hydraulische System einen hydraulischen Sammler (42) umfaßt, der mit einem Druck höher als dem hydrostatischen Druck, der im Bohrloch auf der maximalen Verwendungstiefe der seismischen Quelle herrscht, beaufschlagt ist, weiterhin einen Speicher (43) bei einem sehr niedrigen Druck sowie Magnetventile (45, 46) umfaßt, um diese Kanäle (32-34) mit dem hydraulischen Sammler oder dem Speicher derart zu verbinden, daß eine Aufweitung oder eine Entspannung jeder der Hüllen (19) hervorgerufen wird.

## Claims

1. A basically localised seismic emission device for a well, comprising a pulse type seismic source (1) designed to be lowered into a well or bore hole and provided with a retractable means of anchorage for the direct application, to the formations surrounding the well, of the energy created by the seismic source when triggered, comprising, in combination, at least two expanding confining devices (2, 3) arranged on each side of the seismic source and connected to it, in order to prevent the propagation, along the well, of that fraction of energy not transmitted directly to the walls of the well, each expanding device comprising a rigid tubular element (6), a sleeve (19) made from a flexible material, a means (21) of tightening the sleeve against the tubular element (6) at its first end, a thrust type device (13) capable of sliding along the tubular element (6), the said thrust type device comprising a truncated part (14) designed to slide between the tubular element and the sleeve at its second end, in order to move it away from the tubular element, a means to displace each thrust type device and an hydraulic system delivering a fluid under pressure, associated with a means of switching (45, 46) for the purpose of displacing, when required, each thrust type device and to expand each expanding device.

2. Device in accordance with claim 1, characterised in that it includes a passage (25) communicating with the well at a first end and emerging under the sleeve (19) at its opposite end.

3. Device in accordance with claim 1 or 2, characterised in that a cavity (15) is provided between the thrust type device and the said tubular element, each tubular element comprising several parts (9, 12) with different external cross sections separated by shoulders and the said thrust type device including an inner recess, a cross section adapted to that of the largest part (9) of the tubular element, the space between the bottom of the said recess and one of the said shoulders (16) constituting the said cavity (15).

4. Device in accordance with claim 2, characterised in that the hydraulic system is common to the two expanding devices and located in a compartment (4) forming an extension to one of these (3), the internal cavity (15) of the second expanding device (2) fixed on the opposite side of the seismic source being connected to the hydraulic system by means of a first passage (32), a second passage (33) passing along the full length of the tubular element (6) of the first expanding device and an external pipe (37) connecting the said passages (32, 33), the internal cavity (15) of the first expanding device (3) communicating with the second passage (33) through a third passage (34).

5. Device in accordance with claim 3, characterised in that the thrust type device (13) and the sleeve (19) for each expanding device are extended by rings (22, 26) which are integral, in translation, with the corresponding tubular element and by a nut (29) fixed to one of the said rings and to one end piece (31, 4), each tubular element (8) comprising, at its end opposite to the end piece, a means of fixing (7, 8) to the seismic source.

6. Device in accordance with claim 5, characterised in that the end piece for one of the expanding devices 2 is connected to a multi function cable 5 connecting the device to an installation external to the well and the end piece for the other expanding device (3) is a compartment containing the said hydraulic system.

7. Device in accordance with claim 1, characterised in that the hydraulic system comprises an hydraulic accumulator (42) charged at a pressure exceeding the hydrostatic pressure existing in the well at the maximum working depth of the seismic source, a tank (43) at a very low pressure, electro valves (45, 46) for connecting the said passages (32 to 34) to the said hydraulic accumulator or the said tank in order to expand or relax each of the sleeves (19).

FIG.1

FIG.4

## FIG.2

## FIG.3